# EUROPEAN PATENT APPLICATION

(11) **EP 4 554 173 A1**
(43) Date of publication of application: **14.05.2025**
(21) Application number: 23834762.9
(22) Date of filing: 30.06.2023
(51) Int. Cl.: H04L 41/22, G06F 3/0481

(54) **NETWORK FAULT RECOVERY METHOD AND APPARATUS, DEVICE, AND STORAGE MEDIUM**

(30) Priority: 04.07.2022 CN 202210778894
(71) Applicant: Continental Automotive Technologies GmbH, 30175 Hannover (DE)
(72) Inventor: CUI, Taohua, Chongqing 401133 (CN)
(74) Representative: Continental Corporation
(86) International application number: PCT/CN2023/104900
(87) International publication number: WO 2024/007995

(57) **Abstract**

Embodiments of the present invention disclose a network fault recovery method and apparatus, a device and a storage medium. The method comprises: detecting whether a network fault is present; upon detecting a network fault, determining a network recovery strategy according to an arbitration rule; and executing the network recovery strategy, until network recovery or until execution of the network recovery strategy is complete, wherein the arbitration rule is an arbitration rule related to network fault severity and/or network recovery operation priority, and the network recovery strategy comprises: one or more network recovery operations to be executed. Embodiments of the present invention can automatically repair network faults, so can improve the user experience.

## Description

### Technical Field

The present invention relates to network fault processing technology, in particular to a network fault recovery method and apparatus, a device and a storage medium.

### Background Art

At present, more and more vehicles support mobile communication functionality, for example 3G, 4G or 5G communication. Generally, a T-Box (Telematics-BOX, intelligent on-board terminal) is chiefly responsible for implementing mobile functionality within a vehicle. In a vehicle use scenario, when a fault develops in an on-board terminal network, a user will struggle to reset the network by a manual operation to repair the network fault, so the user might have no network to use for a long period of time, which spoils the user experience.

### Summary of the Invention

Embodiments of the present invention provide a network fault recovery method and apparatus, a device and a storage medium, which are able to improve the user experience.

A network fault recovery method in embodiments of the present invention comprises: detecting whether a network fault is present; upon detecting a network fault, determining a network recovery strategy according to an arbitration rule; and executing the network recovery strategy, until network recovery or until execution of the network recovery strategy is complete, wherein the arbitration rule is an arbitration rule related to network fault severity and/or network recovery operation priority, and the network recovery strategy comprises: one or more network recovery operations to be executed.

The arbitration rule comprises: when multiple network faults of different severities are present together, determining the network recovery strategy according to a network fault of high severity.

**The** arbitration rule comprises: when multiple network faults of different severities are present together, separately determining network recovery operations to be executed in the next stage according to the multiple network faults, and determining the network recovery strategy according to priorities of the network recovery operations to be executed in the next stage.

The arbitration rule comprises: if a second network fault is detected when execution reaches an (x)th network recovery operation for a first network fault, determining the network recovery strategy according to priorities of an (x+1)th network recovery operation and a (y)th network recovery operation, wherein the (y)th network recovery operation is a first-stage network recovery operation corresponding to the second network fault.

When multiple network faults of different severities are present together, the step of executing the network recovery strategy comprises: each time execution of a network recovery operation stage is completed, judging whether the multiple network faults are repaired; upon judging that a network fault of high severity has been repaired but a network fault of low severity has not been repaired, executing a specific network recovery operation, the priority of the specific network recovery operation being not higher than the lowest priority among network recovery operations corresponding to repair of the network fault of high severity, wherein lower priority of a network recovery operation indicates stronger repair ability of the corresponding network recovery operation.

The network fault comprises at least one of the following: a modem fault, reception of a rejection code of a network service provider, a SIM card fault, failure to read an ICCID, failure to make or receive a call, failure to send or receive a message, failure to register on a network and failure to transmit network data.

The modem fault has a first severity; the reception of a rejection code of a network service provider, SIM card fault and failure to read an ICCID all have a second severity; the failure to make or receive a call, failure to send or receive a message, failure to register on a network and failure to transmit network data all have a third severity; and the degrees of severity of the first to the third severities decrease in sequence.

The network recovery operation comprises at least one of the following: in order of decreasing priority, switching flight mode, switching flight mode and resetting a SIM card, resetting a SIM card, and rebooting a system, wherein a network recovery operation of high priority is executed before a network recovery operation of low priority.

The step of determining a network recovery strategy according to an arbitration rule upon detecting the presence of a network fault comprises: upon detecting the presence of a network fault, judging whether a preset condition is met, and if the preset condition is met, executing the step of determining a network recovery strategy according to an arbitration rule, wherein the preset condition comprises at least one of the following: a network fault automatic recovery function being in an activated state, a remaining power level of a device being greater than a preset value, and the device not being in a programming session.

A network fault recovery apparatus in embodiments of the present invention comprises: a detection module, for detecting whether a network fault is present; a processing module, for determining a network recovery strategy according to an arbitration rule when the presence of a network fault is detected; and an execution module, for executing the network recovery strategy, wherein the arbitration rule is a rule based on network fault severity and network recovery operation priority, and the network recovery strategy comprises: one or more network recovery operations to be executed which have an execution sequence relationship.

An electronic device of the present invention comprises: a processor; and a memory, for storing an executable instruction of the processor,
wherein the processor is configured to execute the executable instruction to implement the network fault recovery method according to embodiments of the present invention.

A computer-readable storage medium in embodiments of the present invention has a computer program stored thereon, the computer program comprising an executable instruction, wherein, when the executable instruction is executed by a processor, the network fault recovery method according to embodiments of the present invention is implemented.

In embodiments of the present invention, when a network fault is detected, a network recovery operation to be executed is determined according to an arbitration rule (which is related to network fault severity and/or network recovery operation priority), and the network recovery operation is executed to achieve automatic repair of the network fault. This process can be executed automatically with no need for manual operation, so autonomous recovery of the network can be achieved, thus improving the user experience.

### Brief Description of the Drawings

Fig. 1 is a schematic flow chart of an embodiment of the network fault recovery method of the present invention.
Fig. 2 is a schematic flow chart of another embodiment of the network fault recovery method of the present invention.
Fig. 3 is a schematic flow chart of another embodiment of the network fault recovery method of the present invention.
Fig. 4 is a schematic flow chart of another embodiment of the network fault recovery method of the present invention.
Fig. 5 is a schematic flow chart of another embodiment of the network fault recovery method of the present invention.
Fig. 6 is a schematic flow chart of another embodiment of the network fault recovery method of the present invention.
Fig. 7 is a schematic flow chart of another embodiment of the network fault recovery method of the present invention.
Fig. 8 is a schematic flow chart of an embodiment of the network fault recovery apparatus of the present invention; and
Fig. 9 is a schematic flow chart of an embodiment of an electronic device of the present invention.

### Detailed Description of the Invention

To clarify the technical problem to be solved by the present invention as well as the technical solution and beneficial effects thereof, the present invention is explained in further detail below with reference to the drawings and embodiments. It should be understood that the particular embodiments described here merely explain the present invention and are not intended to limit it.

In a terminal device, for example a device having network communication functionality, when a network fault occurs, e.g. it is not possible to make or receive calls, the network issue cannot be repaired automatically, and the user is generally required to identify the fault type and then repair the fault manually, e.g. reboot or switch flight mode. Such a solution is still acceptable to users where devices such as smart phones are concerned, but in the case of an on-board terminal device (e.g. a T-box), users generally struggle to effect a repair by manual resetting; thus, users might have no network to use for a long period of time, and this will have a major impact on the user experience.

Thus, embodiments of the present invention provide a network fault recovery method and apparatus, a device and a storage medium. When a network fault is detected, a network recovery strategy can be determined automatically according to network fault severity and/or network recovery operation priority information (including a single network recovery operation or a series of network recovery operations with a sequence of execution), and the network can be repaired by automatically executing the network recovery strategy. This process is performed automatically, without any need for the user to participate manually, so the user experience can be improved, and the solution is especially suitable for use in on-board terminal devices. Furthermore, because the network recovery strategy is determined automatically according to network fault severity and/or network recovery operation priority information, the solution is suitable for rationally determining a network recovery strategy in scenarios where several types of network fault are present together, to avoid excessive operation or resource wastage due to the execution of pointless network recovery operations. The solution of the present invention is explained in detail below with reference to particular embodiments.

To facilitate understanding, the network faults and network recovery operations involved in embodiments of the present invention are explained first.

Specifically, the network faults involved in embodiments of the present invention mainly include one or more of the following: modem faults, reception of network service provider rejection codes (e.g. #2, #3, #6, #7 or #8), SIM (Subscriber Identity Module) card faults, failure to read the ICCID (Integrated Circuit Card Identity), failure to make or receive calls, failure to send or receive messages, failure to register on a network and failure to transmit network data. All of the above network faults can result in the terminal device having no network to use. Furthermore, the network faults mentioned above are merely examples and not exhaustive, and should not be construed as limiting the embodiments of the present invention.

The network faults mentioned above can be classified according to severity; for example, refer to Table 1, which divides the abovementioned network faults into three severities:

**Table 1**

| Severity | Network fault |
|---|---|
| 3 | Modem fault |
| 2 | Network service provider rejection code received, SIM card fault and failure to read ICCID |
| 1 | Failure to make or receive calls, failure to send or receive messages, failure to register on network and failure to transmit network data |

As shown in Table 1, this uses the numbers 1, 2 and 3 to represent the severity of network faults, wherein a larger number indicates a more serious network fault; for example, the number 3 indicates a serious network fault, the number 1 indicates a minor network fault, and the number 2 indicates a network fault between a serious network fault and a minor network fault. It must be explained that the method of division in Table 1 is merely an example and non-limiting; those skilled in the art could adopt a different method of division according to actual needs, e.g. set the severity of a SIM card fault to be 3, indicating that this is a serious network fault. Furthermore, in Table 1, the severities are divided into only three grades, but in other embodiments, the severities may be divided into two, four or more grades. Furthermore, if the severities of network faults are the same, then the operations for repairing these network faults can be the same.

The network recovery operations involved in embodiments of the present invention may include any one of the following or a combination thereof: switching flight mode, switching flight mode and resetting SIM card, resetting SIM card, and rebooting system. The specific operations involved in switching flight mode may comprise: switching on flight mode, then switching off flight mode, wherein there may be a time interval between switching on flight mode and switching off flight mode. The specific operations involved in switching flight mode and resetting SIM card may comprise: switching on flight mode, then resetting SIM card, then switching off flight mode, wherein there may be a time interval between operations. Furthermore, the types of operations involved which are mentioned above are merely examples and non-limiting; a larger or smaller number of network recovery operations may be involved in different scenarios.

The priorities of the abovementioned network operations may be divided by referring to the method in Table 2 below, wherein the priorities of network operations means the priorities of network operations in terms of sequence of execution, with a higher priority indicating earlier execution. Generally, network recovery operations which have a lesser impact on the system when executed (e.g. short execution time, low impact on other applications, low power consumption) may be set to have a higher priority.

**Table 2**

| Priority | Network recovery operation |
|---|---|
| 1 | Reboot system |
| 2 | Reset SIM card |
| 3 | Switch flight mode and reset SIM card |
| 4 | Switch flight mode |

**As** shown in Table 2, this uses numbers to represent the priorities of network recovery operations, wherein a larger number indicates a higher priority, i.e. earlier execution. For example, in Table 2, rebooting the system has the lowest priority, because rebooting the system will have a major impact on the device and therefore must be used with care, whereas switching flight mode has a lesser impact on the system and can be used preferentially. Furthermore, the method of division in Table 2 is merely an example and non-limiting; those skilled in the art could adopt a different method of division according to actual needs, e.g. set the priority of resetting the SIM card to be 3, and set the priority of switching flight mode and resetting the SIM card to be 2.

Once the network faults have been divided by severity and the network recovery operations have been divided by priority as described above, when a network fault occurs, a network recovery strategy may be determined according to network fault severity and/or network recovery operation priority. This is explained below with reference to the drawings.

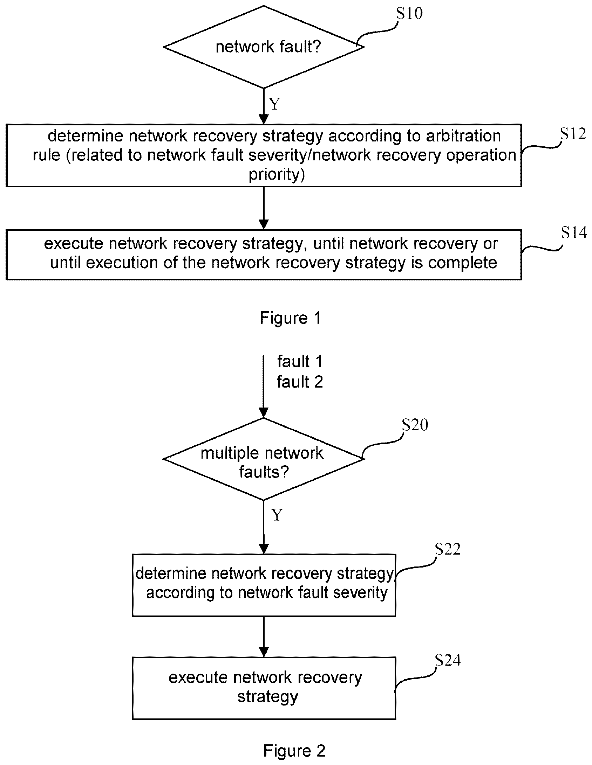

Fig. 1 shows a schematic flow chart of an embodiment of the network fault recovery method of the present invention. The method comprises the following steps:
Step S10, detecting whether a network fault is present.

In step S10, the network situation of the device may be monitored (in real time or periodically), to identify whether the abovementioned network faults are present in the network. For example, the abovementioned network faults may be defined in the device in advance, and step S10 may monitor whether the predefined network faults have occurred in the device. When step S10 detects that a network fault is present, steps S12 and S14 may be performed, so as to automatically repair the network fault.

Step S12, determining a network recovery strategy according to an arbitration rule.

The network recovery strategy comprises: one or more network recovery operations to be executed. Furthermore, the network recovery strategy may further comprise: the number of times that a network recovery operation is repeated, i.e. in this embodiment, a network recovery operation may be repeated multiple times. Furthermore, the network recovery strategy may further comprise: execution interval information; for example, before or after each network recovery operation is executed, there may be a preset time interval, then the network recovery operation is executed or another network recovery operation is executed. In this way, it is possible to reduce the impact which the execution of the network recovery operation has on other applications, as well as prevent recovery processing for certain transient faults (e.g. inability to connect to a network due to there being no network coverage in a small area).

The arbitration rule is a rule related to network fault severity and/or network recovery operation priority; with the aid of the arbitration rule, the network recovery strategy may be determined on the basis of network fault severity and/or network recovery operation priority information. To make it easier for a person skilled in the art to understand, the arbitration rule is explained in specific terms below:

In some embodiments, a correspondence between severity and network recovery operation may be established in advance; thus, when a network fault is detected, a corresponding network recovery operation may be looked up according to the severity of the network fault, then a network recovery strategy may be determined according to the priority of the network recovery operation. For example, a correspondence is established between severity "2" and SIM card resetting. When the network fault "failure to read ICCID" is detected, it can be seen from Table 1 that the severity of this network fault is 2, so the corresponding network recovery operation is SIM card resetting. Thus, the network recovery strategy is determined to comprise: resetting the SIM card, and rebooting the system. That is to say, the network recovery operation corresponding to the severity and the recovery operation with a lower priority than the corresponding network recovery operation are included in the network recovery strategy. Of course, it is also possible to directly establish a correspondence between severity 2 and resetting the SIM card and rebooting the system. Of course, it is also possible to directly establish a correspondence between "failure to read ICCID" and priority 2 or resetting the SIM card, etc.

In some embodiments, when multiple network faults are present together, a network recovery strategy may be determined according to the severities of these network faults. For example, when the faults "failure to read ICCID" and "failure to send or receive messages" occur simultaneously, a recovery operation used for "failure to send or receive messages" will not necessarily be suitable for "failure to read ICCID" because the network fault "failure to read ICCID" is more serious. Thus, a network recovery strategy is determined on the basis of the more serious network fault "failure to read ICCID". For example, network recovery strategies corresponding to failure to read the ICCID and failure to send or receive messages are respectively:

Failure to read ICCID: reset SIM card, n1 times; wait for time N1; reboot system, once.

Failure to send or receive messages: switch flight mode, n2 times; wait for time N2; reset SIM card, n3 times; wait for time N3; reboot system, once.

Because the severity of failure to read the ICCID is higher than that of failure to send or receive messages, the final network recovery strategy is determined, according to the network fault of failure to read the ICCID, to be: SIM card reset, n1 times; wait for time N1; reboot system, once.

In some embodiments, when multiple network faults are present together, a network recovery strategy may be determined according to the priority of a network recovery operation to be executed in the next stage which is determined from these network faults. Still taking the faults "failure to read ICCID" and "failure to send or receive messages" as an example, when these two faults occur simultaneously, the network recovery operation to be executed in the next stage for "failure to read ICCID" is SIM card resetting, and the network recovery operation to be executed in the next stage for "failure to send or receive messages" is switching flight mode. The priority of SIM card resetting is lower than that of switching flight mode; this indicates that switching flight mode will not necessarily be able to repair the failure to read the ICCID, so the network recovery strategy is determined to comprise: reset SIM card, n1 times; wait for time N1; reboot system, once.

This example is a situation where network faults occur simultaneously, but in some scenarios, network faults might occur sequentially. For example, "failure to send or receive messages" occurs first, and when the network recovery strategy for this has been executed up to the point where the SIM card is reset, the network fault of failure to read the ICCID occurs. At this time, based on "failure to send or receive messages", the network recovery operation to be executed in the next stage is rebooting the system, whereas, based on failure to read the ICCID, the network recovery operation to be executed in the next stage is resetting the SIM card. Since the priority of rebooting the system is lower, the network recovery strategy is determined to comprise: rebooting the system.

Step S14, executing the network recovery strategy determined in step S12, until network recovery or until execution of the network recovery strategy determined in step S12 is complete.

In step S14, one or more network recovery operations determined in step S12 is/are executed sequentially, and the network recovery situation is monitored (for example, detection is performed each time execution of a network recovery operation stage is completed); when monitoring shows that the network is back to normal, the network recovery operation is stopped. Furthermore, if all of the network recovery operations in the network recovery strategy have been executed but the network can still not be recovered, the user is alerted, or no further processing is performed.

In this embodiment, network recovery operations can be executed automatically with no need for manual operation, so autonomous recovery of the network can be achieved, thus improving the user experience. Furthermore, the network recovery operations to be executed are determined on the basis of an arbitration rule related to network fault severity and/or network recovery operation priority, so the network recovery operations to be executed can be determined rationally, avoiding the execution of an excessive number of network operations, which would impact the user experience. Moreover, such an arbitration rule based on network fault severity and/or network recovery operation priority is especially suitable for application in scenarios where multiple network faults are present together, to determine a better network recovery strategy.

Fig. 2 shows a schematic flow chart of another embodiment of the network fault recovery method of the present invention. In step S20, the method detects whether multiple network faults are present together. When it is detected that multiple network faults are present together, for example, occur simultaneously, in step S22, a network recovery strategy is determined according to network fault severity; for example, a network recovery strategy is determined according to a network fault of high severity, or when network faults of the same severity occur simultaneously, a network recovery strategy is determined according to any one of the network faults. Then in step S24, the network recovery strategy determined in step S22 is executed. For a detailed explanation of determination of a network recovery strategy according to severity, the embodiment of Fig. 1 may be referred to; the explanation is not repeated here. In this embodiment, when multiple network faults are present together, the arbitration rule for them is: a network recovery strategy is determined according to a network fault of high severity. Thus, the problem of determining a network recovery strategy when network faults are present together is solved.

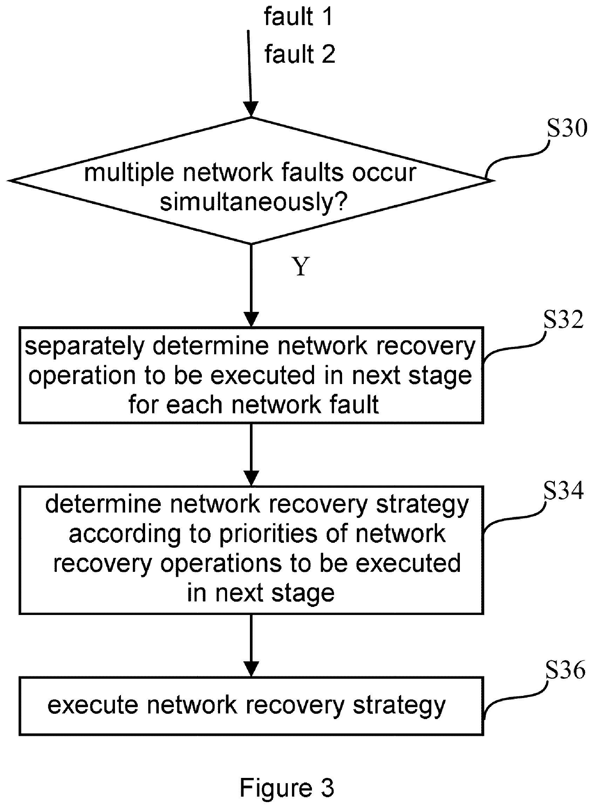

Fig. 3 shows a schematic flow chart of another embodiment of the network fault recovery method of the present invention. In step S30, the method detects whether multiple network faults occur simultaneously; when it is detected that multiple network faults occur simultaneously, step S32 is performed. In step S32, a network recovery operation to be executed in the next stage corresponding to each network fault is determined separately; in step S32, a network recovery strategy is determined according to the priorities of the network recovery operations to be executed in the next stage; in step S36, the network recovery strategy is executed.

An example is given below to explain steps S32 and S34:
Suppose the following can be defined in advance:
Network fault A: network recovery operation 1, network recovery operation 2 and network recovery operation 3.
Network fault B: network recovery operation 3 and network recovery operation 4.

The above information indicates that when network fault A occurs, network recovery operations 1 to 3 are executed in sequence, and when network fault B occurs, network recovery operations 3 to 4 are executed in sequence.

Thus, when network faults A and B occur simultaneously, it will be determined in step S32 that the network recovery operation to be executed in the next stage corresponding to network fault A is network recovery operation 1, and the network recovery operation to be executed in the next stage corresponding to network fault B is network recovery operation 3. In step S34, the priority of network recovery operation 3 is lower than the priority of network recovery operation 1, so the network recovery strategy comprises: performing network recovery operations 3 to 4 in sequence. This is because network recovery operation 1 and network recovery operation 2 are highly likely to be unable to repair network fault B, so execution begins directly at network recovery operation 3.

In this embodiment, when multiple network faults occur simultaneously, the arbitration rule for them is: a network recovery strategy is determined according to the priority of the network recovery operation to be executed in the next stage for each network fault. Thus, the problem of determining a network recovery strategy when network faults are present together is solved.

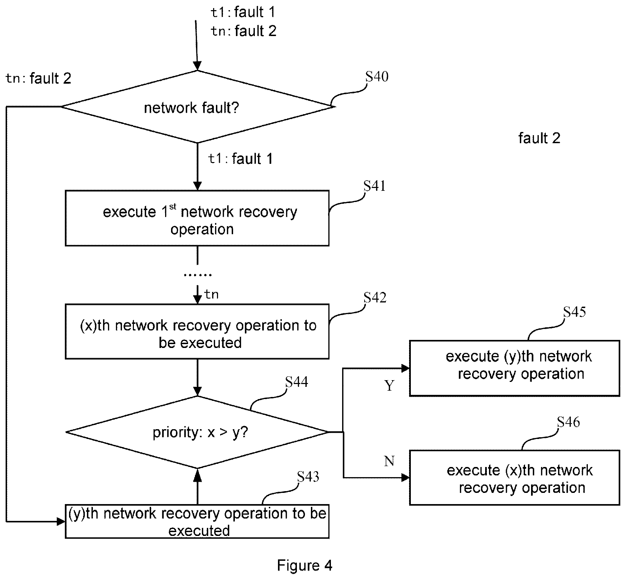

Fig. 4 shows a schematic flow chart of another embodiment of the network fault recovery method of the present invention. In step S40, the method detects a network fault, detecting that a network fault 1 has occurred at time t1. In step S41, network recovery operations corresponding to network fault 1 are executed; in the figure, the process of determining a corresponding network recovery strategy on the basis of network fault 1 is omitted. In step S41, execution is begun at a 1st network recovery operation corresponding to network fault 1, and when execution reaches an (x-1)th network recovery operation, step S40 further detects a network fault 2, at which time network fault 1 has not been repaired, i.e. network faults 1 and 2 are present together. Then in step S42, it is determined that an (x)th network recovery operation is to be executed next for network fault 1, and in step S43, it is determined that a (y)th network recovery operation is to be executed next for network fault 2. Next, in step S44, the priorities of the (x)th network recovery operation and the (y)th network recovery operation are compared, and if the priority of the (x)th network recovery operation is higher, step S45 is performed: executing the (y)th network recovery operation. If the priority of the (y)th network recovery operation is higher, step S46 is performed: executing the (x)th network recovery operation. Furthermore, it must be explained that if the priorities of the (x)th network recovery operation and the (y)th network recovery operation are the same, either operation may be executed; or, based on the times when the (x)th network recovery operation and the (y)th network recovery operation are to be executed, the operation with the closest execution time is selected for execution. For example, suppose that:
Network fault A: time interval 60 s; network recovery operation 1; time interval 60 s; network recovery operation 2.
Network fault B: time interval 60 s; network recovery operation 2; time interval 60 s; network recovery operation 4.

When network recovery operation 1 has been executed for network fault A, an interval of 60 s is required before executing network recovery operation 2, but after an interval of 20 s, network fault B occurs. Based on network faults A and B, it is confirmed that network recovery operation 2 will be executed in the next stage for both network faults (same priority). At this time, for network fault A, network recovery operation 2 can be executed after an interval of 40 s, whereas for network fault B, an interval of 60 s is required before network recovery operation 2 can be executed. Thus, at this time, execution is continued according to the recovery strategy for network fault A, i.e. network recovery operation 2 is executed after an interval of 40 s.

This embodiment solves the problem of how to determine a network recovery strategy when multiple network faults occur sequentially and some recovery operations have already been executed for one of the network faults.

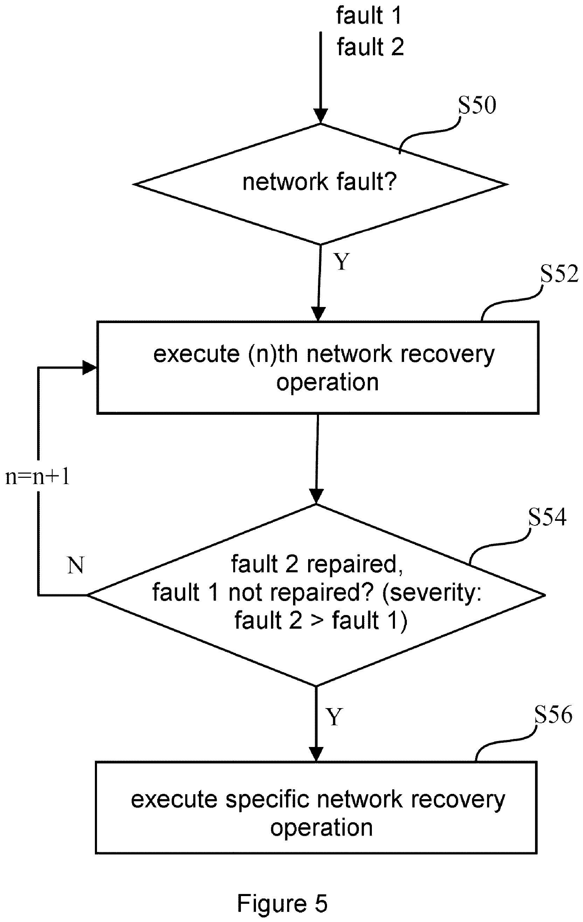

Fig. 5 shows a schematic flow chart of another embodiment of the network fault recovery method of the present invention. This shows a processing strategy in the case where, when multiple network faults are present together, a network fault of high severity has been repaired but a network fault of low severity has not been repaired in the process of executing network recovery operations. As shown in Fig. 5, in step S50, a network fault is detected, and upon detecting that network faults 1 and 2 are present together, according to the method in embodiments of the present invention, it is determined that a network recovery strategy comprises: executing a series of network recovery operations (omitted in the figure). In step S52, the associated network recovery operations are executed, wherein the fault recovery situation is judged in step S54 each time execution of a network recovery operation stage is completed. For example, when it is judged that a fault of high severity has been repaired but a fault of low severity has not been repaired, step S56 is performed: executing a specific network recovery operation. Otherwise, the method returns to step S52 to execute the next network recovery operation stage. The specific network recovery operation means a network recovery operation whose priority is not higher than (lower than or equal to) the lowest priority among network recovery operations corresponding to the network fault of high severity. For example, the specific network recovery operation is the network recovery operation with the lowest priority among all network recovery operations. In this embodiment, when determining a network recovery strategy according to the method of this embodiment, in general, a network fault of high severity will be repaired together with a network fault of low severity, or a network fault of low severity will be repaired before a network fault of high severity. When a situation occurs in which a network fault of high severity is repaired but a network fault of low severity is not repaired, this indicates that this network fault of low severity might not be a normal network fault, so a network recovery operation with a stronger recovery effect (e.g. the network recovery operation with the lowest priority) is executed directly, to avoid excessive operation and resource wastage.

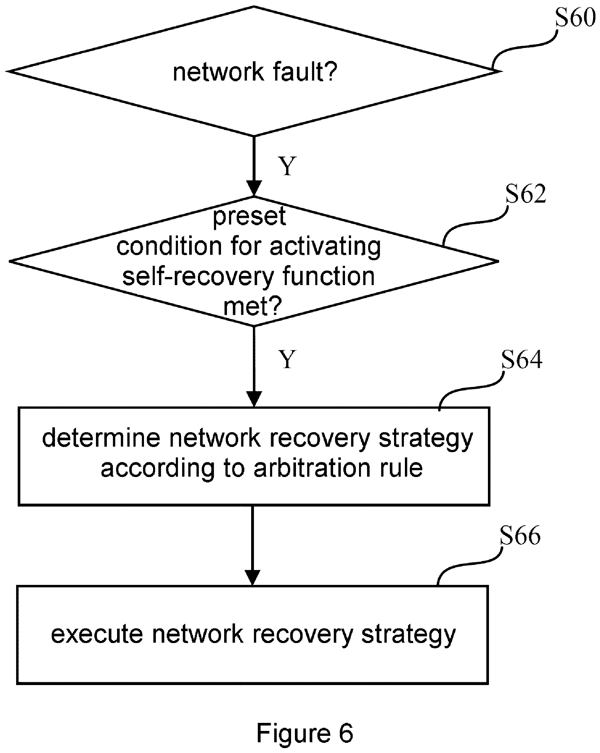

Fig. 6 shows a schematic flow chart of another embodiment of the network fault recovery method of the present invention. Steps S60, S64 and S66 are similar to steps S10 - S14 in Fig. 1, so are not described needlessly here. In Fig. 6, a step S62 is added: upon detecting that a network fault is present, judging whether a preset condition for activating a recovery function is currently met, and executing the network recovery solution described in embodiments of the present invention only when the preset condition is met. In this sense, step S62 may also be performed before step S60, i.e. detection of whether a network fault is present is activated only when the abovementioned preset condition is met. The abovementioned preset condition includes but is not limited to at least one of the following: a network fault automatic recovery function is in an activated state, the remaining power level of the device is greater than a preset value, and the device is not in a programming session, wherein a programming session means that an operator causes the device to enter a programming mode through diagnostics or in another way. An operating interface may be provided in the device, to allow a user to activate or turn off the network fault automatic recovery function. Furthermore, the network fault automatic recovery function may also be configured automatically by the device; for example, when the remaining power level of the device is insufficient, the network fault automatic recovery function is turned off automatically. Thus, the method of this embodiment only needs to detect whether the network fault automatic recovery function of the device is activated, and does not need to pay attention to the remaining power level of the device. Furthermore, the abovementioned preset condition might be different for devices of different types. For example, in the case of a mobile device such as a mobile phone, the remaining power level is very important, and the execution of network recovery operations will consume a large amount of power. For this reason, activation of the network fault automatic recovery function will be prohibited when the power level is lower than a certain value. In the case of an on-board intelligent device such as a T-box, on the other hand, the power level may be a factor that does not need to be taken into account, so the preset condition need not include a requirement for the remaining power level of the device. This embodiment can control network recovery operations flexibly by setting the preset condition for activation of the network fault automatic recovery function.

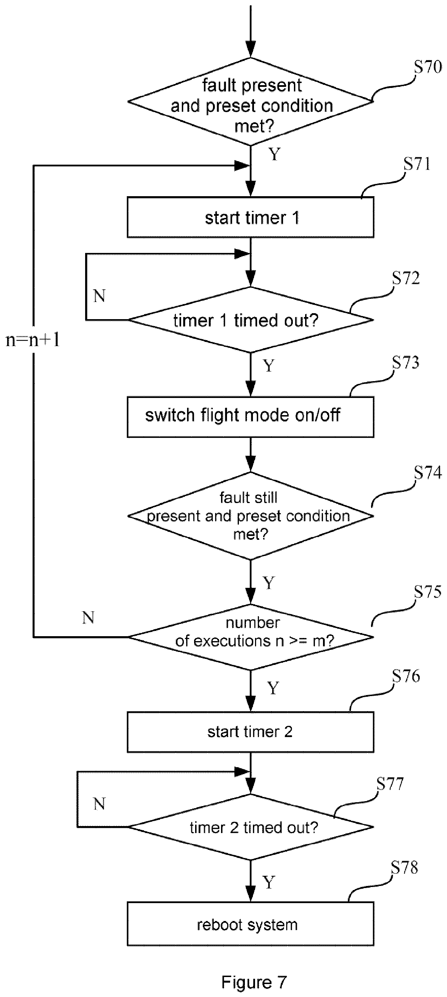

Fig. 7 shows a schematic flow chart of another embodiment of the network fault recovery method of the present invention. This embodiment is mainly used to explain the process of executing a network recovery strategy. As shown in Fig. 7, step S70 comprises detecting whether a network fault is present and detecting whether a detection preset condition is met. When a network fault is detected and the preset condition is met, a network recovery strategy is determined as: switching flight mode, m times; rebooting the system, once. Thus, the network recovery strategy comprises: the operations executed, and the corresponding numbers of times. The process of determining the network recovery strategy is omitted in the figure; the explanations in the embodiments above may be referred to. Next, the network recovery strategy is executed in steps S71 to S78. Specifically, in steps S71 and S72, a timer 1 is started, and when the timer 1 times out, step S73 is performed: executing the operation of switching flight mode on and off. When one operation of switching flight mode on and off has been executed, a judgment is made in step S74 as to whether the fault has been repaired and whether the preset condition is still met. If the fault has not been repaired and the preset condition is still met, step S75 is performed: judging whether the number n of executions is greater than or equal to m. If it is less than m, then 1 is added to the number of executions (n = n + 1), and step S71 is then performed; if it is greater than or equal to m, then step S76 is performed: starting a timer 2, and upon judging in step S77 that the timer 2 has timed out, the system is rebooted (step S78). In this embodiment, the same recovery operation may be executed multiple times, so that to the greatest extent possible, a simple recovery operation is used to repair the network fault. Furthermore, there is a time interval both before and after each recovery operation is executed, so as to avoid impacting other applications of the system.

The procedure of the method in embodiments of the present invention has been explained in detail above. Embodiments of the apparatus or device or storage medium in embodiments of the present invention will now be explained below. It must be explained that many details of the embodiments of the apparatus or device or storage medium below have already been described above, so for the sake of conciseness are not repeated.

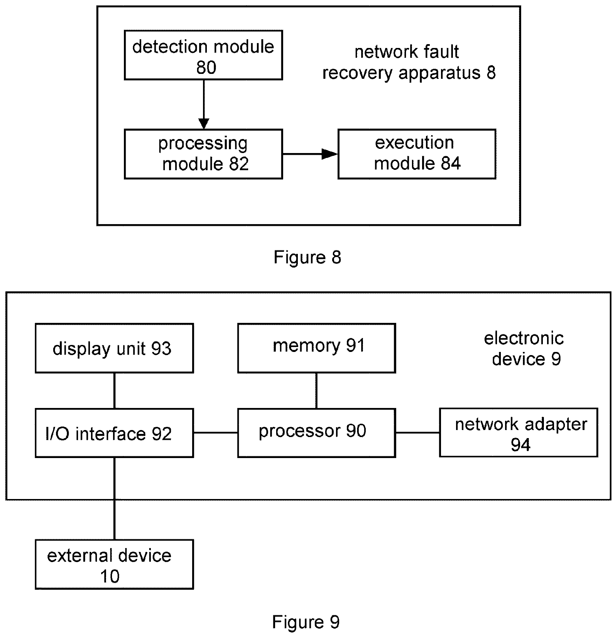

Fig. 8 shows a schematic structural drawing of an embodiment of a network fault recovery apparatus 8 of the present invention. The network fault recovery apparatus 8 comprises: a detection module 80, for detecting whether a network fault is present; a processing module 82, for determining a network recovery strategy according to an arbitration rule when the presence of a network fault is detected; and an execution module 84, for executing the network recovery strategy, wherein the arbitration rule is a rule based on network fault severity and network recovery operation priority, and the network recovery strategy comprises: one or more network recovery operations to be executed which have an execution sequence relationship.

Fig. 9 shows a schematic structural drawing of an embodiment of an electronic device of the present invention. The electronic device 9 comprises: a processor 90; and a memory 91, for storing executable instructions of the processor 90, wherein the processor 90 is configured to execute the executable instructions stored in the memory 91 to implement the network fault recovery method according to embodiments of the present invention. The abovementioned memory 91 may comprise a volatile storage medium or a non-volatile storage medium; for example, the memory 91 may comprise: a random access storage unit (RAM) and/or a cache storage unit, and may further comprise a read-only storage unit (ROM). The electronic device 9 may communicate with one or more external devices 10 (e.g. a keyboard, a Bluetooth device, a display device, etc.), for example, may be connected to an external device 10 via an I/O interface 92. Furthermore, the I/O interface 92 may also be connected to another device in the electronic device 9, for example its own display unit 93, wherein the display unit 93 may be a touch display unit. The electronic device 9 may also be equipped with a network adapter 94, so as to communicate with one or more networks (e.g. a local area network (LAN), a wide area network (WAN) and/or a public network, e.g. internet) via the network adapter 94.

Furthermore, embodiments of the present invention also provide a computer-readable storage medium having a computer program stored thereon, the computer program comprising executable instructions, wherein, when the executable instructions are executed by a processor, the network fault recovery method according to the present invention is implemented.

Through the description of the embodiments above, those skilled in the art will be able to clearly understand that the method in the embodiments above may be implemented with the aid of software plus a necessary general-purpose hardware platform; of course, it may also be implemented by means of hardware, but in many cases the former is a better mode of implementation. Based on such understanding, the technical solution of the present invention essentially, i.e. the part thereof that makes a contribution to the prior art, may be embodied in the form of a software product, the computer software product being stored in a storage medium (e.g. ROM/RAM, magnetic disk, optical disk) as described above, and comprising a number of instructions for causing a terminal device (which may be a mobile phone, computer, server, controller or network device, etc.) to execute the method described in various embodiments of the present invention.

The above are merely preferred embodiments of the present invention, and the patent scope of the present invention is not therefore limited. All equivalent structures or equivalent procedural changes made using the content of the Description and accompanying drawings of the present invention, or direct or indirect use in other related technical fields, are by the same principle included in the scope of patent protection of the present invention.

## Claims

1. A network fault recovery method, comprising:
detecting whether a network fault is present;
upon detecting a network fault, determining a network recovery strategy according to an arbitration rule; and
executing the network recovery strategy, until network recovery or until execution of the network recovery strategy is complete,
wherein the arbitration rule is an arbitration rule related to network fault severity and/or network recovery operation priority, and the network recovery strategy comprises: one or more network recovery operations to be executed.

2. The network fault recovery method as claimed in claim 1, wherein the arbitration rule comprises:
when multiple network faults of different severities are present together, determining the network recovery strategy according to a network fault of high severity.

3. The network fault recovery method as claimed in claim 1, wherein the arbitration rule comprises:
when multiple network faults of different severities are present together, separately determining network recovery operations to be executed in the next stage according to the multiple network faults, and determining the network recovery strategy according to priorities of the network recovery operations to be executed in the next stage.

4. The network fault recovery method as claimed in claim 1, wherein the arbitration rule comprises:
if a second network fault is detected when execution reaches an (x)th network recovery operation for a first network fault, determining the network recovery strategy according to priorities of an (x+1)th network recovery operation and a (y)th network recovery operation, wherein the (y)th network recovery operation is a first-stage network recovery operation corresponding to the second network fault.

5. The network fault recovery method as claimed in claim 1, wherein, when multiple network faults of different severities are present together, the step of executing the network recovery strategy comprises:
each time execution of a network recovery operation stage is completed, judging whether the multiple network faults are repaired;
upon judging that a network fault of high severity has been repaired but a network fault of low severity has not been repaired, executing a specific network recovery operation, the priority of the specific network recovery operation being not higher than the lowest priority among network recovery operations corresponding to repair of the network fault of high severity,
wherein lower priority of a network recovery operation indicates stronger repair ability of the corresponding network recovery operation.

6. The network fault recovery method as claimed in any one of claims 1 - 5, wherein the network fault comprises at least one of the following: a modem fault, reception of a rejection code of a network service provider, a SIM card fault, failure to read an ICCID, failure to make or receive a call, failure to send or receive a message, failure to register on a network and failure to transmit network data.

7. The network fault recovery method as claimed in claim 6, wherein the modem fault has a first severity; the reception of a rejection code of a network service provider, SIM card fault and failure to read an ICCID all have a second severity; the failure to make or receive a call, failure to send or receive a message, failure to register on a network and failure to transmit network data all have a third severity; and the degrees of severity of the first to the third severities decrease in sequence.

8. The network fault recovery method as claimed in any one of claims 1 - 5, wherein the network recovery operation comprises at least one of the following: in order of decreasing priority, switching flight mode, switching flight mode and resetting a SIM card, resetting a SIM card, and rebooting a system, wherein a network recovery operation of high priority is executed before a network recovery operation of low priority.

9. The network fault recovery method as claimed in any one of claims 1 - 5, wherein the step of determining a network recovery strategy according to an arbitration rule upon detecting the presence of a network fault comprises:
upon detecting the presence of a network fault, judging whether a preset condition is met, and if the preset condition is met, executing the step of determining a network recovery strategy according to an arbitration rule,
wherein the preset condition comprises at least one of the following: a network fault automatic recovery function being in an activated state, a remaining power level of a device being greater than a preset value, and the device not being in a programming session.

10. A network fault recovery apparatus, comprising:
a detection module, for detecting whether a network fault is present;
a processing module, for determining a network recovery strategy according to an arbitration rule when the presence of a network fault is detected; and
an execution module, for executing the network recovery strategy;
wherein the arbitration rule is a rule based on network fault severity and network recovery operation priority, and the network recovery strategy comprises: one or more network recovery operations to be executed which have an execution sequence relationship.

11. An electronic device, **characterized by** comprising:
a processor; and
a memory, for storing an executable instruction of the processor,
wherein the processor is configured to execute the executable instruction to implement the network fault recovery method as claimed in any one of claims 1 - 9.

12. A computer-readable storage medium, having a computer program stored thereon, the computer program comprising an executable instruction, wherein, when the executable instruction is executed by a processor, the network fault recovery method as claimed in any one of claims 1 - 8 is implemented.
